# FASCICULE DE BREVET EUROPEEN

(11) **EP 0 798 113 B1**
(45) Date de publication et mention de la délivrance du brevet: **18.02.2004**
(21) Numéro de dépôt: 97400679.3
(22) Date de dépôt: 26.03.1997
(51) Int. Cl.: B32B 31/04, B32B 3/12

(54) **Procédé et machine de fabrication de panneaux**
Verfahren und Maschine zum Herstellen von Platten
Method and apparatus for producing panels

(30) Priorité: 27.03.1996 FR 9603796
(43) Date de publication de la demande: 01.10.1997
(73) Titulaire: Cardo Door France, 91090 Lisses (FR)
(72) Inventeur: Durinck, Jean, 91680 Bruyeres le Chatel (FR)
(74) Mandataire: Tanguy, Gilbert André

(56) Documents cités:
- DE-A- 2 423 845
- FR-A- 1 594 606
- GB-A- 783 362
- GB-A- 1 060 121
- US-A- 2 731 379
- US-A- 3 684 618

## Description

L'invention se rapporte à un procédé de fabrication de panneaux composites dits « sandwich » dans lesquels deux plaques ou feuilles sont collées de part et d'autre d'une nappe médiane à alvéoles transversales, constituée d'un réseau de bandes de largeur constante définissant lesdites alvéoles. L'invention s'applique avantageusement à la mise en oeuvre d'un procédé dans lequel ladite nappe médiane peut se présenter d'abord à l'état contracté, lesdites bandes sensiblement jointives, puis être déployée pour faire apparaître lesdites alvéoles. Ces dernières sont de préférence à contour hexagonal, du type nid d'abeilles. L'invention concerne aussi une machine pour la mise en oeuvre du procédé.

La structure décrite ci-dessus d'un panneau composite dit « sandwich » est connue, sa fabrication pose des problèmes. En particulier, ladite nappe médiane est difficile à manipuler et à positionner en raison de sa déformabilité. Un procédé connu consiste à déployer une nappe médiane aux dimensions d'un panneau, de façon à former des alvéoles aussi régulières que possibles, à encoller séparément et uniformément deux plaques et à les appliquer de part et d'autre de ladite nappe, sur les chants desdites alvéoles. Les plaques encollées sont difficiles à manipuler. Il est nécessaire de les appliquer l'une après l'autre sur ladite nappe médiane. La consommation de colle est importante.

L'invention permet de supprimer tous ces inconvénients.

Plus précisément, l'invention concerne un procédé de fabrication de panneaux consistant à coller des plaques ou feuilles de part et d'autre d'une nappe médiane à alvéoles transversales, constituée d'un réseau de bandes de largeur constante définissant lesdites alvéoles, caractérisée en ce qu'il consiste à encoller les chants de ces bandes définissant ledit réseau, de part et d'autre de ladite nappe et à appliquer lesdites plaques ou feuilles sur ces chants encollés.

Selon une caractéristique avantageuse de l'invention, on effectue l'opération consistant à encoller lesdits chants des bandes, lorsque ladite nappe médiane est à l'état contracté, lesdites bandes étant sensiblement jointives et on déploie ensuite ladite nappe médiane pour faire apparaître les alvéoles avant d'y appliquer lesdites plaques ou feuilles. L'encollage des chants se fait ainsi dans les meilleures conditions avec une consommation minimum de colle.

Selon une caractéristique essentielle de l'invention, on pratique deux rainures latérales parallèles dans l'épaisseur des bords longitudinaux de ladite nappe médiane avant son déploiement et on utilise ces rainures pour le guidage de ladite nappe. Ainsi, cette dernière est supportée et maintenue dans son propre plan, sans avoir à reposer sur une surface plane. L'encollage peut se faire sur toute la surface, notamment les bords et simultanément sur les deux faces. Les plaques ou feuilles peuvent aussi être appliquées simultanément sur les deux faces encollées de la nappe. Cette particularité permet donc une production industrielle pratiquement en continu.

L'invention concerne aussi une machine de fabrication de panneaux comprenant une nappe médiane à alvéoles transversales constituée d'un réseau de bandes de largeur constante, de part et d'autre de laquelle sont collées des plaques ou feuilles, caractérisée en ce qu'elle comprend des unités de déplacement de ladite nappe et en ce que le long de ces unités de déplacement sont agencés, suivant le sens de progression de la nappe, un poste d'encollage des chants desdites bandes et un poste d'application desdites plaques ou feuilles sur lesdits chants encollés.

L'invention sera mieux comprise à la lumière de la description qui va suivre de machines de fabrication en continu de panneaux mettant en oeuvre le principe de l'invention, donnée à titre d'exemple et faite en référence aux dessins annexés dans lesquels :
- La figure 1 représente schématiquement, en élévation, le principe d'une machine de fabrication de panneaux composites, conforme à l'invention ;
- la figure 2 est une vue de dessus de la figure 1 ;
- la figure 3 est une vue partielle en élévation, analogue à la figure 1, illustrant une variante de la machine ;
- la figure 4 est une vue de dessus, à plus grande échelle, du poste de déploiement de la nappe médiane ;
- la figure 5 est une coupe V-V de la figure 5 ;
- la figure 6 est une coupe VI-VI, à plus grande échelle, de la figure 2 ; et
- la figure 7 est une coupe VII-VII, à plus grande échelle, de la figure 2.

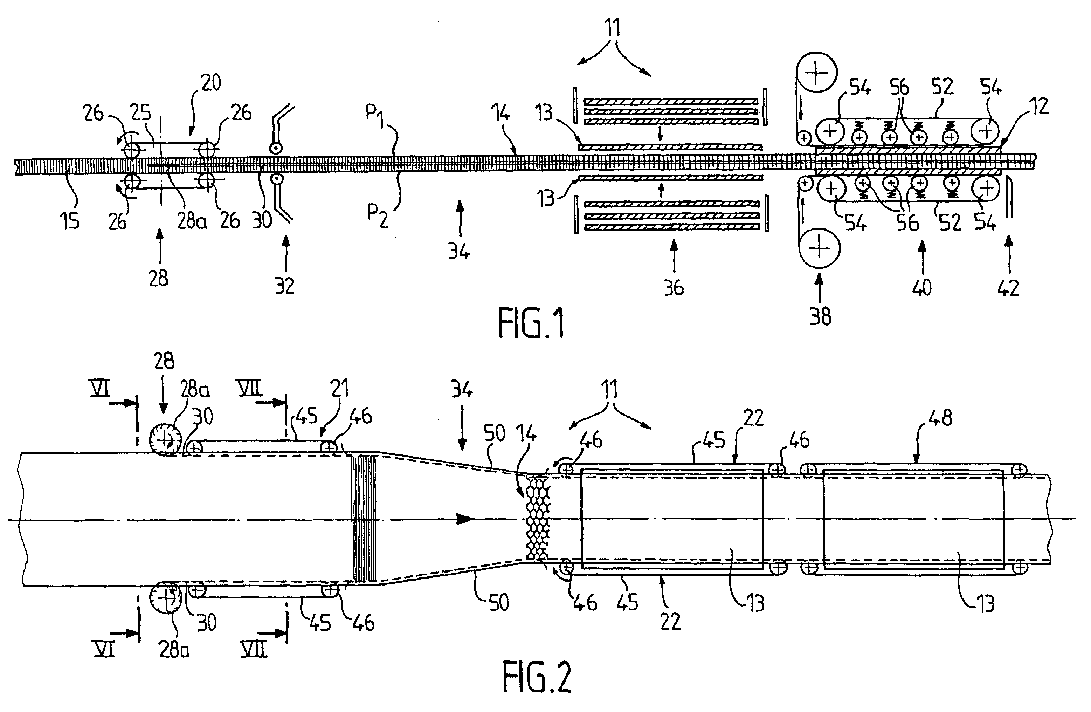

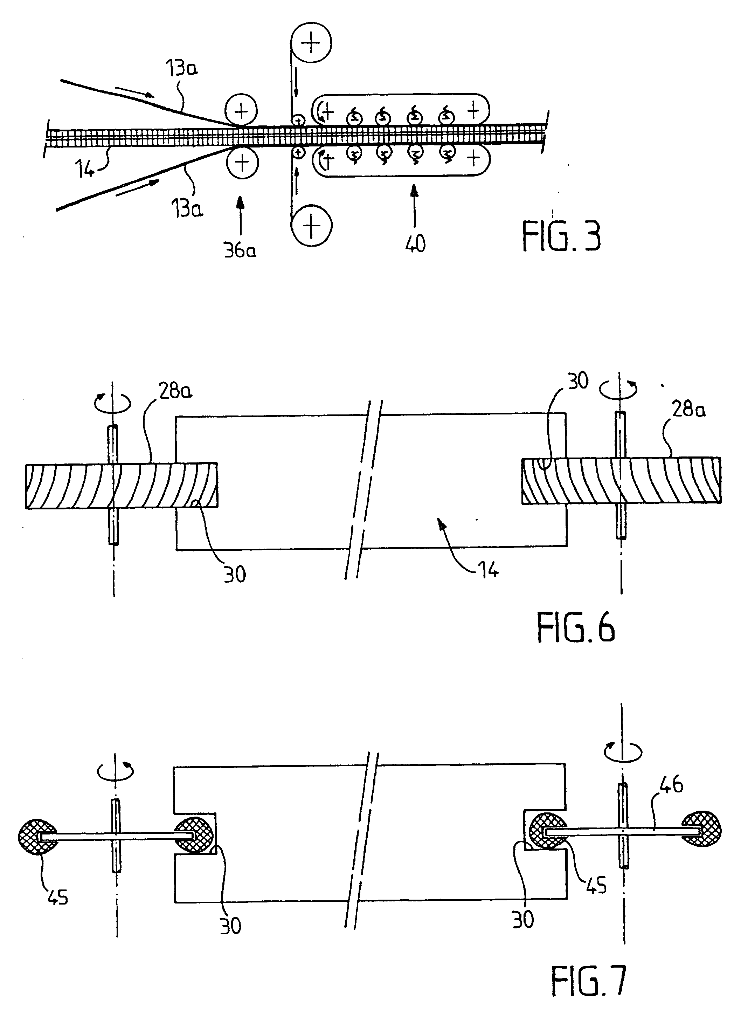

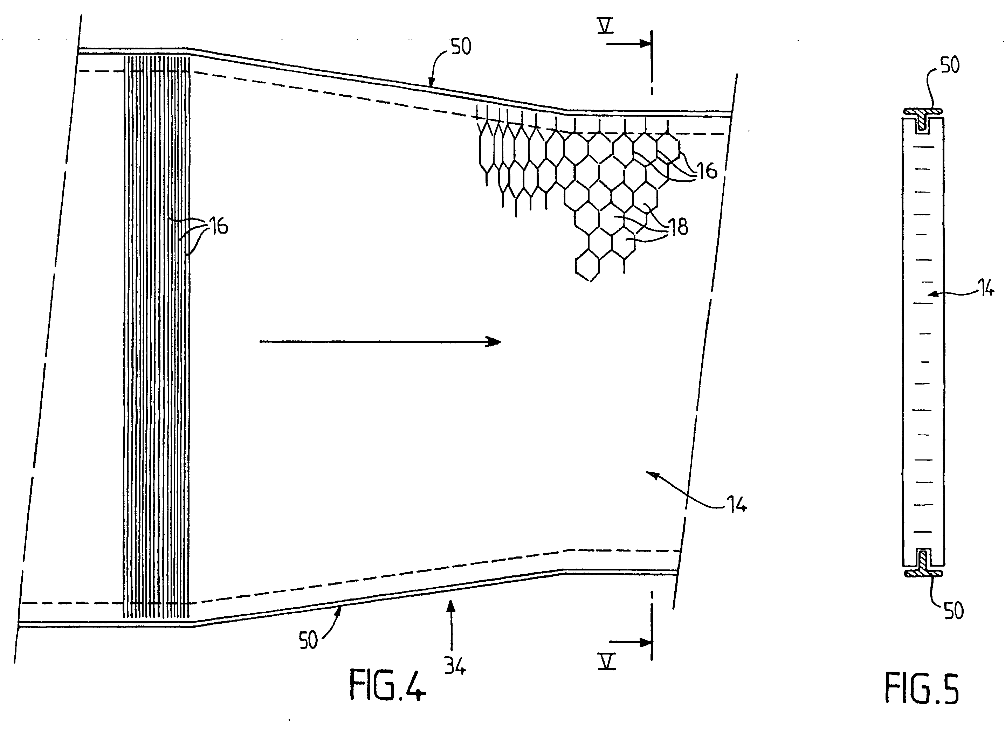

En se reportant aux dessins, on distingue les principaux éléments d'une machine de fabrication 11 de panneaux 12 à structure composite. Selon l'exemple des figures 1 et 2, ces panneaux sont constitués de l'assemblage d'une nappe médiane 14 à alvéoles transversales (s'étendant ici verticalement suivant l'épaisseur de la nappe) et de deux plaques 13 collées de part et d'autre de la nappe médiane. Cette dernière se présente sous la forme d'une large plaque continue 15, épaisse, constituée par un réseau de bandes 16 de largeur constante, susceptibles de définir des alvéoles transversales 18, ici à contour hexagonal dit « nid d'abeilles ».

La largeur des bandes 16 définit l'épaisseur de ladite large plaque continue 15. Plus précisément, ces bandes 16, par exemple en carton, sont collées côte à côte sur des segments de longueur prédéterminée espacés d'une distance double. Cette nappe peut donc se présenter à l'état contracté lorsque toutes les bandes sont accolées les unes contre les autres, formant un ensemble compact, ou bien être déployée suivant une direction prédéterminée, ici la direction longitudinale de la machine, jusqu'à former des alvéoles en nid d'abeilles. Ce déploiement est notamment visible sur la figure 4 : il s'accompagne d'une réduction de la largeur de la nappe 14 dans la direction perpendiculaire à la direction de déploiement. La machine 11 est adaptée pour faire progresser une telle nappe médiane 14 dans son propre « plan » d'abord à l'état contracté, lesdites bandes 16 étant toutes parallèles et côte à côte, puis à l'état déployé, lesdites bandes 16 définissant entre elles les alvéoles 18. Il ressort clairement de ce qui précède que les chants desdites bandes, c'est-à-dire aussi les chants des extrémités des alvéoles 18, se situent dans deux plans parallèles P1 et P2 où l'on vient coller les plaques 13 pour former un panneau rigide. La machine 11 comprend des unités de déplacement 20, 21, 22 de cette nappe continue, pour la faire progresser longitudinalement d'un poste de traitement à un autre. Le sens de progression est de gauche à droite, en considérant les figures 1 et 2. L'unité de déplacement 20 est constituée de deux courroies plates 25 de la largeur de la machine, entraînées par des rouleaux 26 eux-mêmes entraînés par un moteur électrique non représenté. Elle permet d'entraîner la nappe médiane 14 à l'état contracté. Les autres unités de déplacement de la nappe médiane 14 seront décrites plus loin.

Globalement, la machine comporte (successivement ou d'amont en val en considérant le sens de progression de la nappe médiane 14) un poste de fraisage 28 pour pratiquer deux rainures latérales 30, un poste d'encollage 32, pour encoller les chants des alvéoles de la nappe 14 (dans les plans P1 et P2), un poste de déploiement 34 de la nappe 14, un poste d'application 36 des plaques 13, un poste de déroulement d'un film de protection 38, un poste de pressage 40 et un poste de sectionnement transversal 42.

Le poste de fraisage 28 est agencé au voisinage de l'unité d'entraînement 20 mentionnée ci-dessus. Il comporte deux fraises 28a espacées de chaque côté de la nappe 14 et positionnées pour pratiquer les deux rainures latérales 30 dans l'épaisseur des bords longitudinaux de la nappe médiane 14. Les rainures 30 sont pratiquées lorsque la nappe est à l'état contracté puisque le poste de déploiement se trouve en aval. Le poste d'encollage 32 se trouve avantageusement en amont du poste de déploiement 34 et en aval du poste de fraisage 28. L'encollage se fait ainsi sur les chants des bandes constituant la nappe médiane 14, celle-ci étant à l'état contracté. La colle est ici appliquée sur toute la largeur de la nappe en défilement. On obtient ainsi un encollage total des chants avec une relativement faible quantité de colle.

Les unités de déplacement 21 et 22 mentionnées ci-dessus coopèrent avec les rainures 30 pour maintenir la nappe 14 dans son « plan » et la déplacer longitudinalement sans autre support plan jusqu'au poste de pressage 40, tout en dégageant ses bords, ce qui permet un encollage total des chants des alvéoles. L'encollage pourrait néanmoins être partiel, en bandes, en lignes ou en plots. L'unité de déplacement 21 ou 22 comporte deux courroies d'entraînement 45 de chaque côté de la nappe 14. Chacune est montée entre deux poulies 46 et engagée sur une certaine longueur dans les rainures 30 le long de certains tronçons de la nappe. L'une des poulies de chaque courroie est motrice et actionnée par un moteur électrique non représenté. Ainsi, l'unité de déplacement 21 est agencée au voisinage du poste d'encollage 32, tandis que l'unité de déplacement 32 est agencée au voisinage du poste d'application 36 des plaques 13. Chaque courroie 45 en matériau élastomère a une section sensiblement circulaire et comporte une rainure dans laquelle s'engagent les poulies 46. Celles-ci sont plates et peuvent ainsi s'engager dans la rainure 30 (voir figure 7). Une unité de guidage 48 semblable à l'unité de déplacement 21 ou 22, mais sans moteur, est agencée au voisinage du poste de pressage 40. Il est à noter que, pour ne pas surcharger les dessins, l'unité d'entraînement 20, le poste d'encollage 32, le poste d'application 36, le poste de pressage 40 et le poste de sectionnement 42, ne sont visibles que sur la figure 1, tandis que les unités de déplacement 21, 22 et 23 et l'unité de guidage 48, ne sont visibles que sur la figure 2.

Le poste de déploiement 34 se compose essentiellement de deux guides latéraux 50 à section en T, coplanaires et convergeant l'un vers l'autre (voir figures 2, 4 et 5). Ils s'étendent entre les unités de déplacement 21 et 22. Ces guides 50 sont engagés dans les rainures 30 de la nappe 14. Ils sont ainsi conformés et orientés pour imposer un rétrécissement de la nappe 14 lorsque celle-ci se déplace horizontalement . Le rétrécissement entraîne la formation automatique des alvéoles 18.

Le poste de pressage 40 se compose de deux larges courroies 52 (de la largeur des panneaux) montées entre des rouleaux 54. Des moyens de pressage 56, éventuellement chauffants pour activer la colle, permettent de presser les deux plaques 13 de part et d'autre de la nappe médiane 14 sur les chants encollés, pour achever la formation des panneaux.

Dans la variante de la figure 3, les plaques 13 sont remplacées par des feuilles 13a relativement plus souples et qui peuvent être déroulées et appliquées en continu de part et d'autre de la nappe 14. Le poste d'application en continu 36a se substitue donc au poste d'application de la figure 1. Le poste de pressage 40 n'est pas modifié ; les autres postes, non visibles sur la figure 3 sont semblables à ceux du mode de réalisation précédemment décrit.

On remarque que la nappe 14 est entièrement maintenue et guidée grâce à ses rainures 30. Dans un premier temps, les guides sont parallèles et leur écartement correspond à la largeur de la nappe à l'état contracté. Puis les guides se rapprochent progressivement provoquant le déploiement des alvéoles. Enfin, les guides redeviennent parallèles et leur écartement correspond à la largeur des panneaux.

Le fonctionnement de la machine qui vient d'être décrite constitue une mise en oeuvre possible du procédé défini ci-dessus. Cependant, il est possible d'encoller les chants des alvéoles 18 après déploiement de la nappe 14.

## Revendications

1. Procédé de fabrication de panneaux consistant à coller des plaques (13) ou feuilles (13a) de part et d'autre d'une nappe médiane (14) à alvéoles transversales, constituée d'un réseau de bandes de largeur constante définissant lesdites alvéoles, consistant notamment à encoller les chants (32) de ces bandes définissant ledit réseau, de part et d'autre de ladite nappe et à appliquer lesdites plaques ou feuilles sur ces chants encollés, **caractérisé en ce qu'**il consiste à pratiquer deux rainures latérales (30) parallèles, dans l'épaisseur des bords longitudinaux de ladite nappe médiane (14) avant son déploiement lorsqu'elle est à l'état contracté et à utiliser ces rainures pour le guidage de ladite nappe.

2. Procédé selon la revendication 1, **caractérisé en ce qu'**on réalise le déploiement engageant ladite nappe entre deux guides latéraux convergents (50) engagés dans lesdites rainures latérales.

3. Procédé selon la revendication 1 ou 2, **caractérisé en ce qu'**on forme une nappe médiane précitée avec des alvéoles (18) à contour hexagonal du type nid d'abeilles.

4. Procédé selon la revendication 1, **caractérisé en ce qu'**on pratique lesdites rainures avant encollage.

5. Procédé selon l'une des revendications précédentes, **caractérisé en ce qu'**on effectue l'opération consistant à encoller lesdits chants des bandes lorsque ladite nappe médiane (14) est à l'état contracté, lesdites bandes sensiblement jointives et **en ce qu'**on déploie (34) ensuite ladite nappe médiane, pour faire apparaître lesdites alvéoles avant d'y appliquer lesdites plaques (13) ou feuilles (13a).

6. Machine de fabrication de panneaux comprenant une nappe médiane (14) à alvéoles transversales constituée d'un réseau de bandes de largeur constante, de part et d'autre de laquelle sont collées des plaques (13) ou feuilles (13a), comprenant des unités de déplacement (20, 21 22) de ladite nappe et, le long de ces unités de déplacement, un poste d'encollage (39) des chants desdites bandes, un poste d'application (36) pour appliquer lesdites plaques ou feuilles sur lesdits chants encollés et un poste de déploiement (34) de ladite nappe médiane où celle-ci passe d'un état contracté avec lesdites bandes sensiblement jointives à un état déployé faisant apparaître lesdites alvéoles, **caractérisée en ce qu'**elle comporte un poste de fraisage (28) de deux rainures latérales (30) dans l'épaisseur des bords longitudinaux de ladite nappe médiane, agencé en amont dudit poste de déploiement (34), en considérant le sens de progression de ladite nappe et **en ce que** des unités de déplacement (21,22) précitées coopèrent avec ces rainures.

7. Machine selon la revendication 6, **caractérisée en ce que** ledit poste de déploiement (34) comporte deux guides latéraux (50) convergeant l'un vers l'autre et s'étendant sur une longueur prédéterminée, lesdits guides étant engagés dans lesdites rainures de la nappe.

8. Machine selon la revendication 6, **caractérisée en ce qu'**une unité de déplacement (21,22) précitée comporte des courroies d'entraînement (45) montées entre poulies et engagées dans lesdites rainures le long de certains tronçons du trajet de ladite nappe, certaines poulies étant motrices.

9. Machine selon l'une des revendications 6 à 8, **caractérisée en ce qu'**elle comporte un poste d'application de plaques individualisées (36) pour appliquer de telles plaques de part et d'autre de ladite nappe et un poste de pressage (40), agencés successivement en aval dudit poste de déploiement, en considérant le sens de progression de ladite nappe.

10. Machine selon l'une des revendications 6 à 8, **caractérisée en ce qu'**elle comporte un poste d'application en continu (36a) de deux feuilles pour appliquer de telles feuilles de part et d'autre de la nappe, et un poste de pressage (40), agencés successivement en aval dudit poste de déploiement, en considérant le sens de progression de ladite nappe.

11. Machine selon l'une des revendications précédentes, **caractérisée en ce que** ledit poste d'encollage (32) est situé en amont dudit poste de déploiement en considérant le sens de progression de ladite nappe.

## Claims

1. A process of manufacture of panels consisting of the gluing on both sides of a centre sheet (14) with transverse hexagonal cells, plates (13) or sheets (13a), consisting of a network of strips of constant width, which delimit the said hexagonal cells, consisting in particular in gluing the narrow ends (32), which delimit the said network on both sides of the said centre rebate and in applying the said plates or sheets on these glued-on narrow ends, **characterised by** the fact that it consists in cutting two parallel lateral grooves (30) in the thickness of the longitudinal edges of the said centre sheet (14) before it is deployed, when it is in contracted state and in using the said grooves for guiding the said centre sheet.

2. A process of manufacture according to Claim 1 **characterised by** the fact of implementing the deployment, which engages the said rebate between two converging lateral guides (50), which are engaged in the said lateral grooves.

3. A process according to Claim 1 or 2, **characterised by** the fact that an aforementioned centre rebate is formed with hexagonal cells (18) in the form of a bees' honeycomb.

4. A process according to Claim 1, **characterised by** the fact that the grooves are reformed before gluing.

5. A process according to the preceding Claims, **characterised by** the fact that an operation is performed which consists of gluing the said narrow ends of strips when the said centre rebate (14) is in contracted state, the said strips being almost contiguous and by the fact the said centre rebate is then deployed so as to reveal the said hexagonal cells prior to applying the said plates (13) or sheets (13a) to them.

6. A panel manufacturing machine comprising a centre sheet (14) with transverse hexagonal cells constituting a network of strips of constant width, on both sides of which are glued plates (13) or sheets (13a) comprising transfer units (20, 21, 22) of the said centre rebate and along these transfer units, a gluing station (39) for gluing the narrow ends of the said strips, an application station (36) for the application of the said plates or sheets on the said narrow ends, to which adhesive has been applied and a deployment station (34) of the said centre rebate where it passes from a contracted state with the said almost continuous strips into a deployed state, revealing the said hexagonal cells, **characterised by** he fact that it comprises a milling station (28) for cutting the two lateral grooves (30) in the thickness of the longitudinal edges of the said centre rebate, arranged upstream of the said deployment station (34) with respect to the direction of movement of the said sheet and by the fact that the aforementioned transfer units (21,22) cooperate with these grooves.

7. A machine according to Claim 6, **characterised by** the fact that the said deployment station (34) comprises two mutually converging lateral guides (50) and extending over a predetermined length, the said guides becoming engaged in the said grooves of the centre rebate.

8. A machine according to Claim 6, **characterised by** the fact that an aforementioned transfer unit (21.22) comprises driving belts (45) fitted on pulleys and engaged in the said grooves along certain sections of the passage of the said centre rebate, certain of the pulleys being driving pulleys.

9. A machine according to one of the Claims from 6 to 8, **characterised by** the fact that it comprises an individual plate application station (36) for the application of such plates on both sides of the said centre sheet and a pressing station (40) arranged in turn downstream of the said deployment station, with respect to the direction of movement of the said centre rebate.

10. A machine according to one of he Claims from 6 to 8, **characterised by** the fact that it comprises a continuous application station (36a) for the application of such sheets on both sides of the centre rebate and a pressing station (40) arranged in turn downstream of the of the said deployment station, with respect to the direction of movement of the said centre rebate.

11. A machine according to one of the foregoing Claims, **characterised by** the fact that the said gluing station (32) is located upstream of the said deployment station with respect to the direction of movement of the said centre rebate.

## Patentansprüche

1. Verfahren für die Herstellung von Schichtplatten, daraus bestehend, dass Platten (13) oder Folien (13a) zu beiden Seiten einer Mittelschicht (14) mit transversalen Zellen, bestehend aus einem Netz von Bändern konstanter Breite, die diese Zellen bilden, aufgeklebt werden, insbesondere daraus bestehend, dass auf die Kanten (32) dieser Bänder, die das besagte Netz definieren, zu beiden Seiten der besagten Mittelschicht Klebstoff aufgetragen wird und dass die besagten Platten oder Folien auf diese mit Klebstoff bestrichenen Kanten aufgetragen werden, **dadurch gekennzeichnet, dass** es daraus besteht, dass zwei parallele seitliche Nuten (30) in der Dicke der Längsränder der besagten Mittelschicht (14) vor ihrer Entfaltung angebracht werden, wenn sie sich im zusammengezogenen Zustand befinden, und dass diese Nuten für die Führung der besagten Schicht verwendet werden.

2. Verfahren nach Anspruch 1, **dadurch gekennzeichnet, dass** man die Entfaltung der besagten Schicht zwischen zwei konvergenten seitlichen Führungen (50) vornimmt, die in die besagten seitlichen Nuten eingeführt werden.

3. Verfahren nach Anspruch 1 oder 2, **dadurch gekennzeichnet, dass** man mit Zellen (18) mit sechseckiger Form von der Art der Bienenwaben eine Mittelschicht bildet.

4. Verfahren gemäß Anspruch 1, **dadurch gekennzeichnet, dass** die besagten Nuten vor dem Auftragen des Klebstoffs gebildet werden.

5. Verfahren nach einem der vorangehenden Ansprüche, **dadurch gekennzeichnet, dass** man den Vorgang, der darin besteht, Klebstoff auf die besagten Kanten der Bänder aufzutragen, vornimmt, wenn sich die besagte Mittelschicht (14) im zusammengezogenen Zustand befindet, wobei die besagten Bänder weitgehend aneinander anliegen, und dass man danach die besagte Mittelschicht ausbreitet, so dass die besagten Zellen in Erscheinung treten, bevor man die besagten Platten (13) oder Folien (13 a) einsetzt.

6. Maschine für die Herstellung von Schichtplatten mit einer Mittelschicht (14) mit transversalen Zellen, bestehend aus einem Netz von Bändern konstanter Breite, auf dessen beiden Seiten Platten (13) oder Folien (13a) aufgeklebt sind, mit Einheiten für die Bewegung (20, 21, 20) der besagten Mittelschicht, und, an diesen Bewegungseinheiten entlang, einer Vorrichtung (39) zum Auftragen von Klebstoff auf die Kanten der besagten Bänder, einem Andrückstand (36) zum Andrücken der besagten Platten oder Folien auf die besagten mit Klebstoff bestrichenen Kanten und einen Entfaltungsstand (34) zum Entfalten der besagten Mittelschicht, wo diese aus einem zusammengezogenen Zustand mit den besagten, nahezu aneinander anliegenden Bändern in einen ausgezogenen Zustand übergeht, in dem die besagten Zellen in Erscheinung treten, **dadurch gekennzeichnet, dass** sie einen Frässtand (28) zum Fräsen zweier seitlicher Nuten (30) in der Dicke der Längsränder der besagten Mittelschicht enthält, der vor dem besagten Entfaltungsstand (34) angeordnet ist, entsprechend der Fortschrittsrichtung der besagten Schicht, und dadurch, dass die oben genannten Bewegungseinheiten (21, 22) mit diesen Nuten zusammenwirken.

7. Maschine gemäß Anspruch 6, **dadurch gekennzeichnet, dass** der besagte Entfaltungsstand (34) zwei seitliche Führungen (50) enthält, die zu einander konvergieren und sich über eine vorgegebene Länge erstrecken, wobei die besagten Führungen in die besagten Nuten der Mittelschicht eingreifen.

8. Maschine gemäß Anspruch 6, **dadurch gekennzeichnet, dass** eine oben genannte Bewegungseinheit (21, 22) Antriebsriemen (45) enthält, die zwischen Seilrollen montiert sind und in die besagten Nuten an gewissen Abschnitten des Wegs der besagten Mittelschicht eingreifen, wobei gewisse Seilrollen Antriebsrollen sind.

9. Maschine nach einem der Ansprüche 6 bis 8, **dadurch gekennzeichnet, dass** sie einen Stand zum Andrücken individueller Platten (36) enthält, um solche Platten zu beiden Seiten der besagten Mittelschicht anzudrücken, und einen Pressenstand (40), nacheinander nach dem besagten Entfaltungsstand angeordnet, entsprechend der Bewegungsrichtung der besagten Mittelschicht.

10. Maschine nach einem der Ansprüche 6 bis 8, **dadurch gekennzeichnet, dass** sie einen Stand zum durchgehenden Andrücken (36a) von zwei Folien enthält, der solche Folien zu beiden Seiten der Mittelschicht andrückt, und einen Pressenstand (40), nacheinander nach dem besagten Entfaltungsstand angeordnet, entsprechend der Bewegungsrichtung der besagten Mittelschicht.

11. Maschine nach einem der vorangehenden Ansprüche, **dadurch gekennzeichnet, dass** der besagte Stand zum Auftragen von Klebstoff (32) vor dem besagten Entfaltungsstand angeordnet ist, entsprechend der Bewegungsrichtung der besagten Mittelschicht.
